(19)

Europäisches Patentamt

European Patent Office

Office européen des brevets

(11)  **EP 2 053 894 B1**

(12)  **EUROPEAN PATENT SPECIFICATION**

(45) Date of publication and mention
of the grant of the patent:
**18.07.2012 Bulletin 2012/29**

(51) Int Cl.:
*H04W 72/04* (2009.01)     *H04L 1/18* (2006.01)

(21) Application number: **08167328.7**

(22) Date of filing: **22.10.2008**

(54)  **Uplink communication method in a radio communication system, radio communication system, radio terminal and radio base station**

Aufwärtsverbindungskommunikationsverfahren in einem Funkkommunikationssystem, Funkkommunikationssystem, Funkendgerät und Funkbasisstation

Procédé de communication de liaison montante dans un système de communication radio, système de communication radio, terminal radio et station de base radio

(84) Designated Contracting States:
**DE FR GB**

(30) Priority: **24.10.2007 JP 2007276636**

(43) Date of publication of application:
**29.04.2009 Bulletin 2009/18**

(73) Proprietor: **Fujitsu Limited**
**Kawasaki-shi, Kanagawa 211-8588 (JP)**

(72) Inventor: **Tsutsui, Masafumi**
**c/o FUJITSU LIMITED**
**Kawasaki-shi, Kanagawa 211-8588 (JP)**

(74) Representative: **Holtby, Christopher Lawrence**
**Haseltine Lake LLP**
**Lincoln House, 5th Floor**
**300 High Holborn**
**London WC1V 7JH (GB)**

(56) References cited:
• **NOKIA: "Synchronous adaptive HARQ for E-UTRAN UL", 3GPP DRAFT; R2-071251 ADAPTIVE HARQ FOR LTE UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134213, [retrieved on 2007-03-22]**

• **ALCATEL-LUCENT: "Adaptivity for UL HARQ Transmission", 3GPP DRAFT; R1-074267_UL_HARQ, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107787, [retrieved on 2007-10-02]**
• **ERICSSON: "Uplink synchronous HARQ and RACH", 3GPP DRAFT; R2-080767, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sorrento, Italy; 20080204, 4 February 2008 (2008-02-04), XP050138591, [retrieved on 2008-02-04]**
• **CATT ET AL: "Collision Avoidance While Using Synchronous HARQ", 3GPP DRAFT; R2-062931, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Seoul, Korea; 20061005, 5 October 2006 (2006-10-05), XP050132449, [retrieved on 2006-10-05]**

**Description**

CROSS-REFERENCE TO RELATED APPLICATIONS

The present invention claims priority to Japanese Patent Application No. JP 2007-276636, filed October 24, 2007.

Technical Field

The embodiments discussed herein are directed to an uplink communication method in a radio communication system, a radio communication system, a radio terminal and a radio base station. For example, the embodiments are preferably used for a radio communication system in which signal collision between channels may occur in uplink communication from a radio terminal to a radio base station.

[Background Art]

Techniques concerned with uplink communication in a direction from a user terminal to a radio base station in a radio communication system have been described in the following patent documents.
In a technique described in Japanese Laid-Open Patent Publication No. 2007-6080, a mobile station which is a user terminal transmits a request to a radio base station to get permission for transmission from the radio base station while adding uplink data to the request. Or the mobile station transmits a channel establishment request to establish a channel for transmission of the aforementioned request while adding uplink data to the channel establishment request. As a result, delay due to negotiation before actual transmission of uplink data is suppressed to the utmost so that uplink data can be transmitted efficiently, that is, throughput in uplink communication can be improved.
In a technique described in Japanese Laid-Open Patent Publication No. 2007-194749, either of continuous frequency allocation and discontinuous comb-shaped frequency allocation is performed on each user (terminal). The terminal transmits a random access channel with a variable multi-band width in accordance with the allocation. As a result, users having varying band widths can be supported.
It is desirable to provide for a user's (terminal's) autonomous avoidance of collision (overlap) between channels (frequency resources) used for uplink communication (e.g. between a channel used for re-transmission and a channel used for random access).
It is also desirable to perform the collision avoidance so that user fairness may be maintained.
In addition, it is desirable to obtain operations and effects which are deduced from respective configurations shown in the following description of embodiments and which could not be obtained by the background art.

SUMMARY

According to an aspect of certain embodiments, a radio communication system including a radio base station and radio terminals communicating with the radio base station, wherein the radio communication system further includes a unit for allocating a first frequency resource which is shared by the radio terminals and which is used when each of the radio terminals transmits a first signal to the radio base station in periodic transmission timing. Also included is a unit for allocating a second frequency resource which is used when each of the radio terminals transmits a second signal to the radio base station. Also included is a unit for controlling the second frequency resource when each of the radio terminals transmits the second signal in transmission timing of the first signal, so that the second frequency resource is changed to a third frequency resource which is smaller than the second frequency resource allocated so as not to overlap the first frequency resource.

BRIEF DESCRIPTION OF THE DRAWINGS

Figs. 1A and 1B are views for explaining the outline of an embodiment;
Fig. 2 is a view showing the configuration of a radio communication system according to an embodiment;
Fig. 3 is a block diagram showing the configuration of a radio base station (eNB) and a radio terminal (UE) shown in Fig. 2;
Fig. 4 is a view for explaining input-output of a compression processing calculation portion shown in Fig. 3;
Fig. 5 is a view showing an example of a conversion table which can be used in place of calculation by the compression processing calculation portion shown in Fig. 3;

Fig. 6 is a flow chart for explaining an operation of the compression processing calculation portion shown in Fig. 3;

Figs. 7A to 7F are views showing a frequency resource allocation state for explaining a compressing operation performed by the compression processing calculation portion shown in Fig. 3;

Figs. 8A and 8B are views for explaining transmission power control performed by a transmission power control portion shown in Fig. 3;

Fig. 9 is a view for explaining compression control when two RACHs are allocated in the radio communication system shown in Fig. 2; and

Figs. 10A to 10F are views showing a frequency resource allocation state for explaining a modified example of the compressing operation performed by the compression processing calculation portion shown in Fig. 3.

## DETAILED DESCRIPTION OF THE PREFERRED EMBODIMENTS

An embodiment of the invention will be described below with reference to the drawings. The embodiment which will be described below is only one instance among many and has no intention of excluding application of various modifications and techniques which will be unspecified below. That is, the invention can be modified or changed variously (e.g. respective embodiments can be combined) without departing from the scope of the invention.

[1] Outline

In radio packet transmission, a radio terminal (referred to as user equipment or UE) makes initial access to a radio base station (eNodeB: eNB) by using a random access channel (RACH). RACH is a channel in which transmission timing and a radio resource (frequency band) are determined in advance and which can be used in common but with competition among UEs. That is, when a UE makes initial access to the eNB, the UE transmits a signal (first signal) in predetermined periodic transmission timing by using a predetermined frequency band.

In a system which performs radio packet transmission, HARQ (Hybrid Automatic Repeat Request) is used to perform efficient re-transmission. Among methods for re-transmission, a method of performing re-transmission in predetermined periodic transmission timing by using a predetermined radio resource (frequency band) is called synchronous HARQ (persistent scheduling).

For example, turning to uplink communication from a UE to an eNB, when the UE receives an NACK signal expressing occurrence of reception data error from the eNB, the UE re-transmits transmitted data in which the reception data error occurred. The re-transmission data (second signal) is transmitted to the eNB in predetermined periodic transmission timing by use of a uplink (UL) frequency resource allocated to the UE individually from the eNB.

When the eNB notifies (informs) the UE 30 of the RACH and the UL radio resource (UL resource) used for re-transmission by the UE as information elements of a control channel, the information elements can be designated to the UE 30. Taking the case of an OFDMA (Orthogonal Frequency Division Multiple Access or OFDM: Orthogonal Frequency Division Multiplexing) method as an example, when information concerning the UL resource is included in information elements of UL-MAP, such designation (resource allocation) can be made. The DL resource can be designated based on DL-MAP.

In synchronous HARQ, the period (re-transmission period) of the UL frequency resource used for re-transmission is not re-allocated (re-scheduled) by the eNB in accordance with the allocation state of the RACH. Accordingly, the UE performs re-transmission in accordance with the re-transmission period allocated by the eNB.

As a result, there is a possibility that the frequency resource used for re-transmission (hereinafter referred to as re-transmission resource) and the frequency resource used for random access (hereinafter referred to as RACH resource) may overlap each other in accordance with the transmission timing.

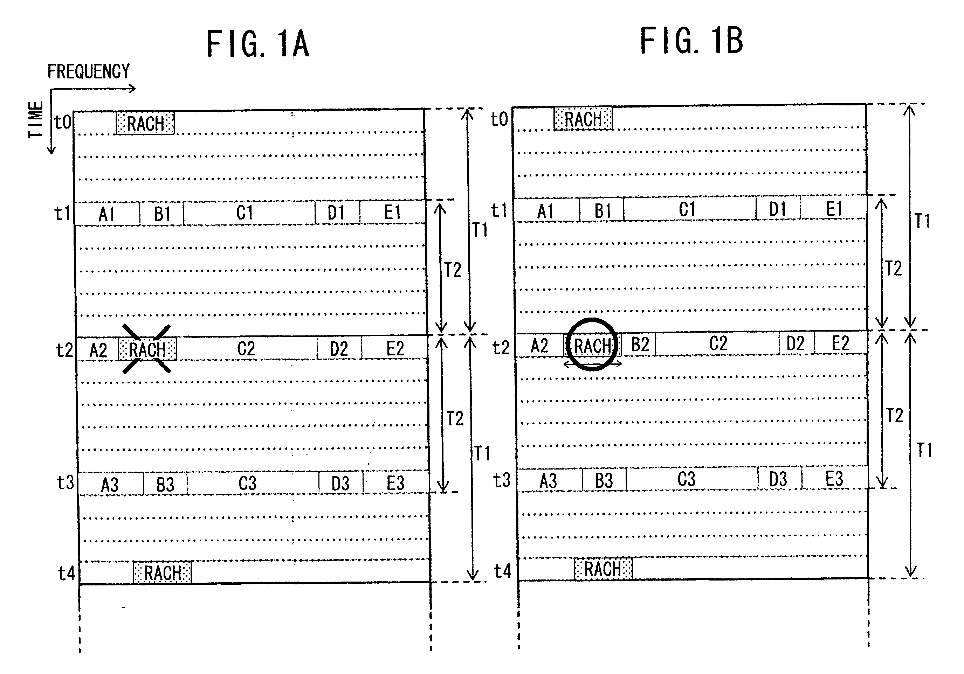

Fig. 1A shows an example of the overlap state.

The example shown in Fig. 1A is based on the assumption that one symbol time is a unit time. This example shows a state in which RACH transmission timing comes every 10 symbol times T1 and transmission timing of re-transmission data (re-transmission timing) comes every 6 symbol times T2 (< T1).

That is, each of users (UEs) A, B, C, D and E can transmit a random access signal to the eNB in any transmission timing decided by the period T1 by using a shared frequency resource determined as the RACH frequency resource in advance. Each of the UEs A, B, C, D and E can transmit re-transmission data in any transmission timing decided by the period T2 by using corresponding one of frequency resources (Ax, Bx, Cx, Dx, Ex: x=1, 2, 3, ···) allocated by the eNB.

This example shows a state in which re-transmission resources (A2 and B2) allocated to the users A and B overlap the RACH frequency resource at a time point represented by t2. Incidentally, in synchronous HARQ, since re-scheduling is not performed as described above, the overlap between the RACH resource and the re-transmission resource allocated to any user occurs periodically in a period according to the relation between T1 and T2.

Since UL signals (a random access signal and a re-transmission signal) collide with each other when such frequency resource overlap occurs, it is preferable to take some avoidance measure. For example, the UE to which the re-transmission resource is allocated is disabled from performing re-transmission during overlap timing between the (see document "Synchronous adoptive HARQ for E-URTAN UL" submitted during the 3GPP TSG-RAN W62 meeting #57bis) re-transmission resource and the RACH resource.

In this case, however, throughput in UL communication is lowered. In addition, there is unfairness among users because only one user (user B in Fig. 1A) to which the frequency resource overlapping the RACH resource is allocated is disabled from performing re-transmission.

In this embodiment, when the RACH transmission timing overlaps the re-transmission timing of synchronous HARQ, each UE controls (selects and decides) the frequency resource used for re-transmission (re-transmission resource) as a smaller resource (i.e. a narrower band) than the frequency resource allocated by the eNB so that the RACH frequency resource (hereinafter referred to as RACH resource) shared by respective UEs can be avoided.

For example, when overlap as shown in Fig. 1A occurs, users A and B decide and select, as re-transmission resources, frequency resources A2 and B2 which are smaller than the re-transmission resources allocated by the eNB so as not to overlap the RACH resource as shown in Fig. 1B. In other words, such processing is equivalent to processing in which each of users A and B performs control so that the re-transmission resource allocated by the eNB is contracted (compressed) so as to be shifted in a direction of avoidance of the RACH resource. This control is hereinafter referred to as compression control.

On this occasion, it is preferable that the other UEs (users C, D and E) having no occurrence of the overlap perform the control in the RACH transmission timing in order to eliminate unfairness among users. If each UE is informed of information concerning the RACH resource and information concerning the quantity of the re-transmission resource allowed to be allocated by the eNB in the system frequency band, the UE can perform such control autonomously based on these kinds of information.

That is, the number of users connected to the eNB and the number of re-transmission resources allocated to UEs by the eNB changes every moment. Each UE however can perform the aforementioned control autonomously even when the UE does not know accurate information (scheduling information) concerning re-transmission resources allocated to the other UEs.

In other words, each UE can select a re-transmission resource not overlapping the RACH resource again based on re-transmission resources allocated by the eNB in accordance with a rule common to all UEs. If the eNB can recognize such a rule, the eNB can specify the re-transmission resource autonomously selected by each UE and perform an appropriate receiving process.

A detailed example will be described below.

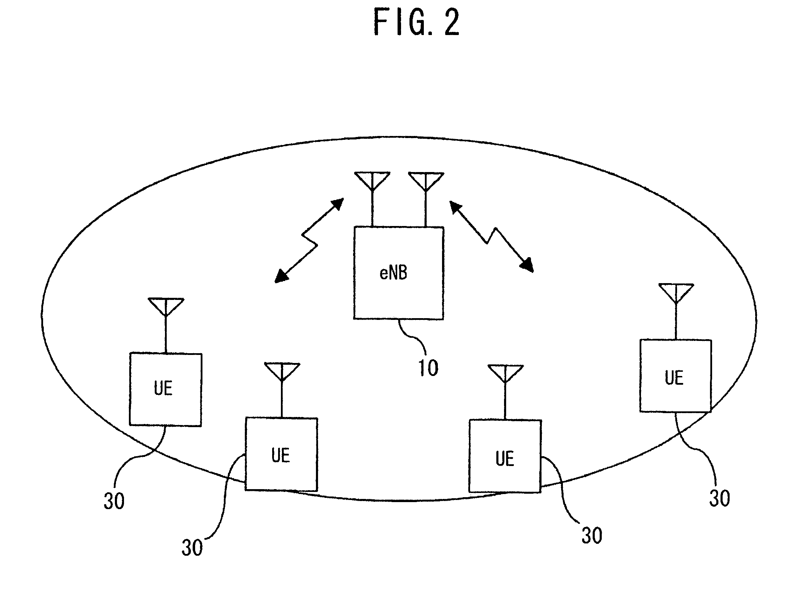

First Embodiment Fig. 2 is a view showing the configuration of a radio communication system according to an embodiment. The radio communication system shown in Fig. 2 includes at least one radio base station (eNB) 10, and radio terminals (UEs) 30 which are linked to the eNB 10 by radio in a radio area formed by the eNB 10 so as to communicate with the eNB 10.

The number of eNBs 10 and the number of UEs 30 in the radio communication system are not limited. This embodiment is based on the assumption that the radio base station 10 is an eNB of the next-generation architecture (SAE (System Architecture Evolution) / LTE (Long Term Evolution)) type having part or all of the function of a radio network controller (RNC). The radio base station 10 may be a base station of the old-generation architecture type (having no RNC function). In addition, a base station in any system may be used if a radio resource (frequency or frequency and time) used for uplink (UL) communication in a direction from each UE 30 to the eNB 10 can be allocated to the UE 30 by the eNB 10.

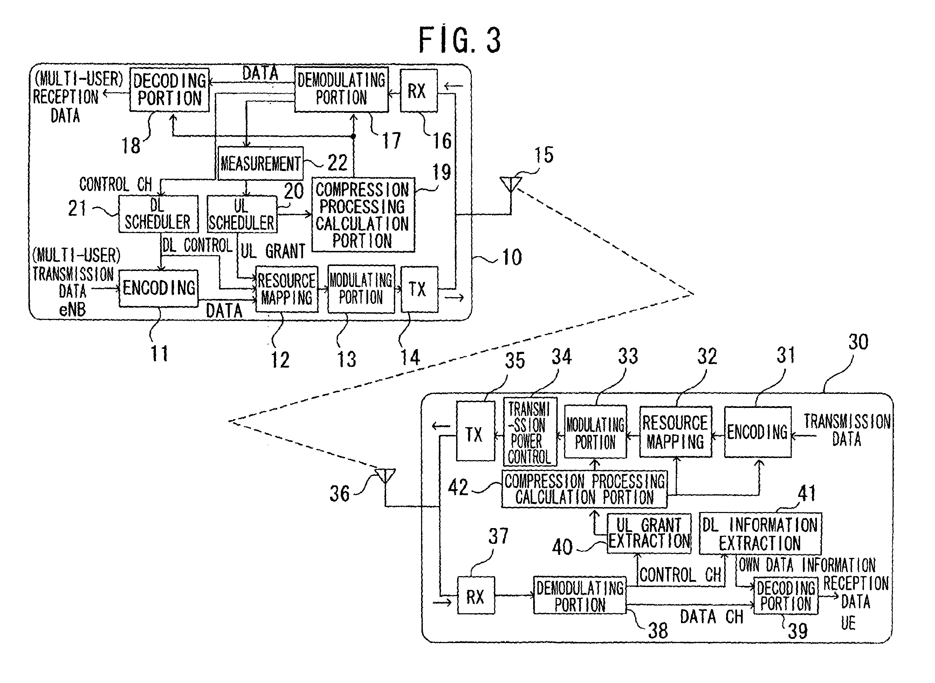

Fig. 3 is a block diagram showing an example of configuration of an eNB 10 and a UE 30.

(Description of eNB)

When attention is paid to the eNB 10 in Fig. 3, the eNB 10 has a transmission system which, for example, has an encoding portion 11, a resource mapping portion 12, a modulating portion 13, a transmission processing portion (TX) 14, and an antenna 15. The eNB 10 has a reception system which, for example, has the antenna 15, a reception processing portion (RX) 16, a demodulating portion 17, and a decoding portion 18. The eNB 10 has a control system which, for example, has a compression processing calculation portion 19, a UL scheduler 20, a DL scheduler 21, and a measurement portion 22.

The antenna 15 receives a UL radio signal from space while radiating a DL radio signal addressed to the UE 30 to space. A radio signal obtained by the transmission processing portion 14 is transmitted to the UE 30 via the antenna 15. A radio signal received from the UE 30 via the antenna 15 is output to the reception processing portion 16. Although the antenna 15 is used in common for transmission and reception as described above, antennas may be provided separately for transmission and reception.

The encoding portion 11 encodes transmission data addressed to users (UEs 30) by a predetermined encoding method such as a turbo encoding method.

The resource mapping portion 12 has a function of mapping the encoded data obtained by the encoding portion 11 on a predetermined DL radio resource in accordance with control (scheduling) based on the DL scheduler 21. Incidentally, the radio resource between the eNB 10 and the UE 30 includes frequency and/or time. For example, taking an OFDMA (or OFDM) method as an example, the DL/UL radio resource is defined as a burst expressed in sub-channel frequency and symbol time. The UL/DL burst used by the UE30 to communicate with the eNB 10 can be designated from the eNB 10 to the UE 30 by burst allocation information (control information) called DL/UL-MAP.

The modulating portion 13 modulates the transmission data (DL burst) after the mapping by a predetermined modulating method such as QPSK, 16QAM, 64QAM, etc.

The transmission processing portion 14 applies a radio transmission process such as generation of a predetermined radio frame, DA conversion, frequency conversion (up conversion) to radio frequency, amplification of transmit power, etc. to the modulated signal obtained by the modulating portion 13 and generates a DL radio transmission signal (radio packets). The DL radio transmission signal is transmitted to the UE 30 via the transmission and reception antenna 15. As the radio frame, there can be used a radio frame based on any one of OFDMA (or OFDM), CDMA and HSPA (High Speed Packet Access) methods, a radio frame in compliance with any one of these methods or one of other radio frames.

The reception processing portion 16 applies a predetermined radio reception process including low-noise amplification, frequency conversion (down conversion) to base band frequency, gain control, AD conversion, etc. to the UL radio signal received by the antenna 15.

The demodulating portion 17 demodulates the reception signal obtained from the reception processing portion 16 by a predetermined demodulation method corresponding to the UL modulation method in the UE 30. The demodulated result (data) includes control channel data (control data), and data channel data (user data). The control data is delivered to the DL scheduler 21 while the user data is delivered to the decoding portion 18.

The decoding portion 18 decodes the demodulated data (user data) obtained from the demodulating portion 17 by a predetermined decoding method corresponding to the UL encoding method in the UE 30.

The compression processing calculation portion (identification unit) 19 specifies (identifies) a resource which was selected when the UE 30 controlled (selected) a re-transmission resource autonomously in accordance with a predetermined rule in timing of overlap between the RACH resource and the re-transmission resource. Details thereof will be described later.

The measurement portion 22 measures reception levels, etc. of signals transmitted from UEs 30 requesting UL scheduling and generates information used by the UL scheduler 20.

The UL scheduler 20 performs allocation (scheduling) of radio resources (UL resources) used for UL communication. The UL scheduler 20 generates information (UL grant information) including information concerning permission of UL communication for UEs 30 to be permitted and information concerning UL resources to be used by the UEs 30 and transfers the UL grant information to the resource mapping portion 12.

Accordingly, the UL grant information is mapped as control data on a predetermined region of a DL radio frame and transmitted to a target UE 30. Taking the case of an OFDMA method as an example, the UE 30 can be informed of the UL grant information as information elements of UL-MAP. The UE 30 performs UL transmission by using the UL resource designated by the received UL grant information.

Incidentally, the same method as described above may be used so that the UE 30 can be informed of information concerning the RACH resource common to all UEs 30 and information concerning a re-transmission resource individually provided to the UE 30 in synchronous HARQ. For example, the UE 30 can be informed of the fact that the transmission period of RACH and the re-transmission period of synchronous HARQ are T1 and T2 respectively as shown in Figs. 1A and 1B. In synchronous HARQ, re-scheduling concerned with re-transmission resources is not performed as described above.

The UL scheduler 20 functions as a reception processing control unit. That is, the UL scheduler 20 has a function of controlling (adjusting) the operation of the demodulating portion 17 in accordance with UL resources individually allocated to UEs 30 or UL resources calculated (specified) by the compression processing calculation portion 19 so that the demodulating portion 17 can demodulate signals received from the respective UEs 30.

Specifically, the eNB 10 performs processing of the demodulating portion 17 and the decoding portion 18 while autonomously performing the same process as the control used in the UE 30, in the timing when the UE 30 performs control and transmission to avoid the RACH resource because the transmission timing of RACH and the re-transmission timing of synchronous HARQ overlap each other. The eNB 10 performs this processing for all the UEs 30 so that reception processing of all the UEs 30 can be performed.

The DL scheduler 21 performs scheduling of radio resources (DL resources) used for DL communication. The DL scheduler 21 generates information of allocation of DL resources to be subjected to reception processing by the UEs 30 and transfers the allocation information to the resource mapping portion 12.

As a result, the allocation information is transmitted to a target UE 30 while mapped as one of control data on a predetermined region of a DL radio frame. Taking the case of an OFDMA method as an example, information concerned with DL resources to be allocated is included in information elements of DL-MAP so that the UE 30 can be informed of this information.

The UE 30 performs DL reception processing by using the DL resource designated by the received DL-MAP.

(Description of UE)

When attention is paid to the UE 30 shown in Fig. 3, the UE 30 in this example has a transmission system which, for example, has an encoding portion 31, a resource mapping portion 32, a modulating portion 33, a transmission power control portion 34, a transmission processing portion (TX) 35, and an antenna 36. The UE 30 has a reception system which, for example, has the antenna 36, a reception processing portion (RX) 37, a demodulating portion 38, and a decoding portion 39. The UE 30 has a control system which, for example, has a UL grant extraction portion 40, a DL information extraction portion 41, and a compression processing calculation portion (UL resource control portion) 42.

The antenna 36 receives a DL radio signal from space while radiating a UL radio signal addressed to the eNB 10 to space. A UL radio signal obtained from the transmission processing portion 35 is transmitted to the eNB 10 via the antenna 36. A DL radio signal received from the eNB 10 via the antenna 36 is output to the reception processing portion 37. Although the antenna 36 is used in common for transmission and reception as described above, antennas may be provided separately for transmission and reception.

The encoding portion 31 encodes data (UL data) to be transmitted to the eNB 10 by a predetermined encoding method such as a turbo encoding method.

The resource mapping portion 32 has a function of mapping the encoded data obtained from the encoding portion 31 on a UL resource designated (allocated) from the eNB 10 or on a UL resource controlled (changed) to avoid the RACH resource in transmission timing of overlap between the RACH resource and a re-transmission resource, in accordance with control based on the compression processing calculation portion (UL resource control portion) 42.

The modulating portion 33 modulates the transmission data after mapping by a predetermined modulating method such as QPSK, 16QAM, 64QAM, etc.

The transmission power control portion 34 controls UL transmission power. In this example, the transmission power control portion 34 controls UL transmission power in accordance with control based on the compression processing calculation portion (UL resource control portion) 42. Details thereof will be described later.

The transmission processing portion 35 applies a radio transmission process such as generation of a predetermined radio frame, DA conversion, frequency conversion (up conversion) to a radio frequency, transmission power amplification, etc. to the modulated signal obtained from the modulating portion 33 and generates a UL radio transmission signal (radio packets). The UL radio transmission signal is transmitted to the eNB 10 via the transmission and reception antenna 36.

The reception processing portion 37 applies a predetermined radio reception process including low-noise amplification, frequency conversion (down conversion) to a base band frequency, gain control, AD conversion, etc. to the DL radio signal received via the antenna 36.

The demodulating portion 38 demodulates the reception signal obtained from the reception processing portion 37 by a predetermined demodulating method corresponding to the DL modulating method in the eNB 10. The demodulated result (data) includes control channel data (control data), and data channel data (user data). The control data is delivered to the UL grant extraction portion 40 and the DL information extraction portion 41. The user data is delivered to the decoding portion 39.

The decoding portion 39 decodes the demodulated data (user data) obtained from the demodulating portion 38 by a predetermined decoding method corresponding to the DL encoding method in the eNB 10.

The UL grant extraction portion 40 has a function of extracting UL grant information from the control data. The extracted UL grant information is transferred to the compression processing calculation portion (UL resource control portion) 42.

The DL information extraction portion 41 has a function of extracting its own control data addressed to the UE 30 from the aforementioned control data. The extracted control data is transferred to the decoding portion 39 so as to be decoded together with the user data.

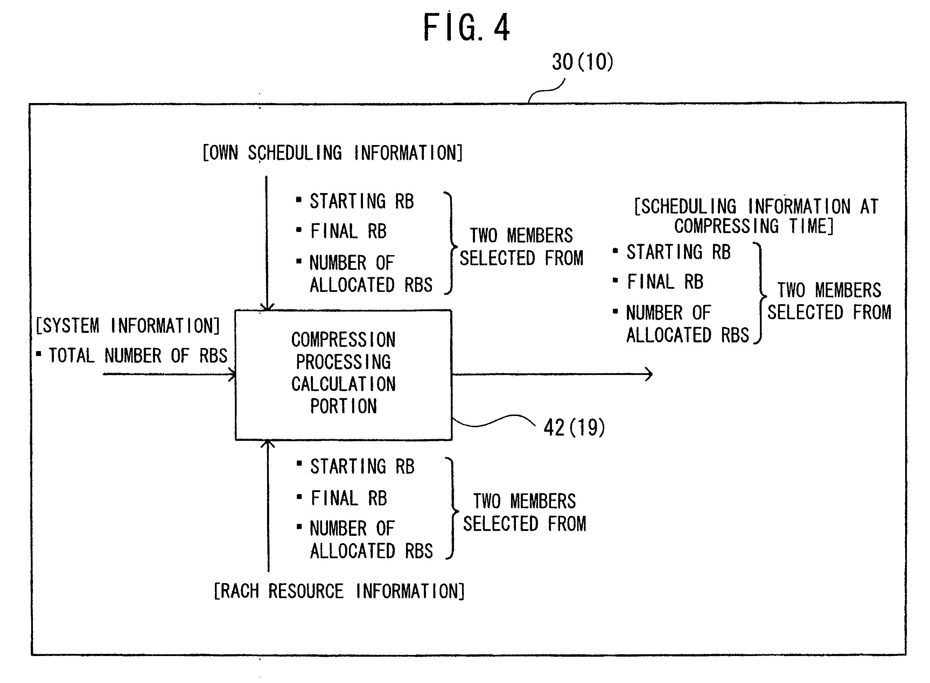

The UL resource control portion (compression processing calculation portion) 42 controls allocation of UL resources. In this example, the UL resource control portion 42 has a function of obtaining information concerned with a re-transmission resource (third frequency resource) in the case of overlap between the RACH transmission timing and the re-transmission timing based on information (system information) concerning system information (system frequency band), information (allocation information) concerning the RACH resource (first frequency resource) and information (allocation information, i.e. its own UL scheduling information of the UE 30) concerning the re-transmission resource (second frequency resource) allocated to the UE 30 by the eNB 10, for example, as shown in Fig. 4.

When the radio resource in the system frequency band (hereinafter referred to as "system band") is expressed in unit block called resource block (RB), a UL resource (frequency band) in the system frequency band (total number of RBs) can be specified by at least two members selected from the information group consisting of starting RB, final RB, and the number of allocated RBs. Accordingly, information concerning the RACH resource (hereinafter referred to as RACH resource information) and information concerning the re-transmission resource (hereinafter referred to as re-transmission resource information) can be specified based on at least two members selected from the information group consisting of stating RB, final RB, and the number of allocated RBs.

The RACH resource information and the re-transmission resource information are obtained as information elements of UL grant information from the UL grant extraction portion 40. The information concerning the system frequency band (total number of RBs) may be fixedly set in a memory etc. not shown in advance or may be given as an information element of UL grant information from the eNB 10.

Specifically, the compression processing calculation portion 42 obtains (decides) a re-transmission resource (compression resource) to be used at the timing overlap time, by using the following expressions (1), (2), (3A) and (3B). The re-transmission resource obtained by the compression processing calculation portion 42 may include part of the re-transmission resource allocated by the eNB 10 or may not include it.

$$\text{Compression Ratio } \alpha = 1 - (\text{Number of RBs in RACH}) \div (\text{Number of RBs in System Band}) \ldots (1)$$

$$\text{Number of RBs after Compression} = (\text{Number of Allocated RBs at Ordinary Time}) \times \alpha \ldots (2)$$

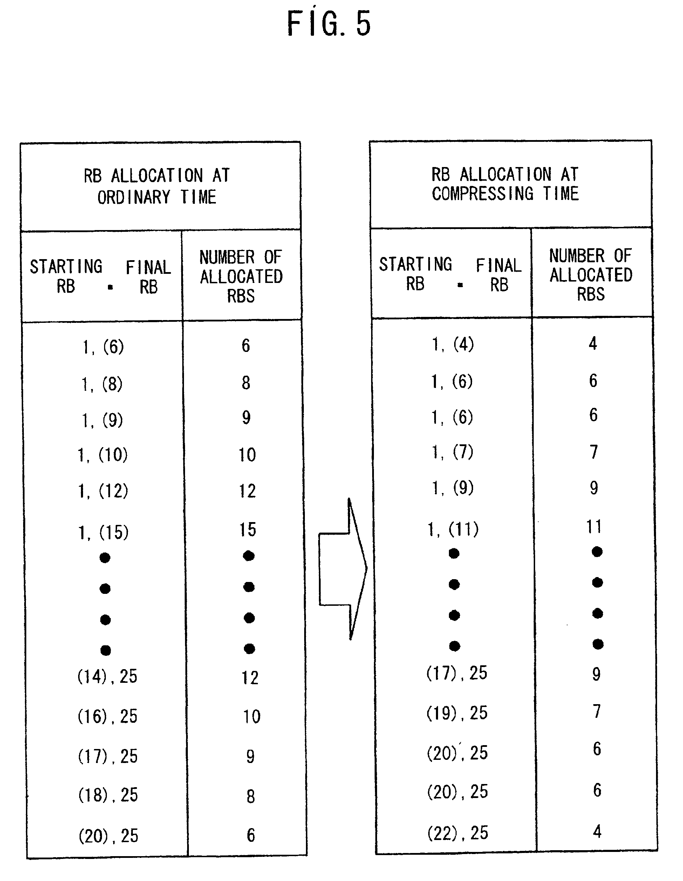

For example, values calculated based on these expressions in advance may be held as a conversion table (table-format data) shown in Fig. 5 in a memory etc. (not shown) in order to make calculations based on these expressions dispensable.

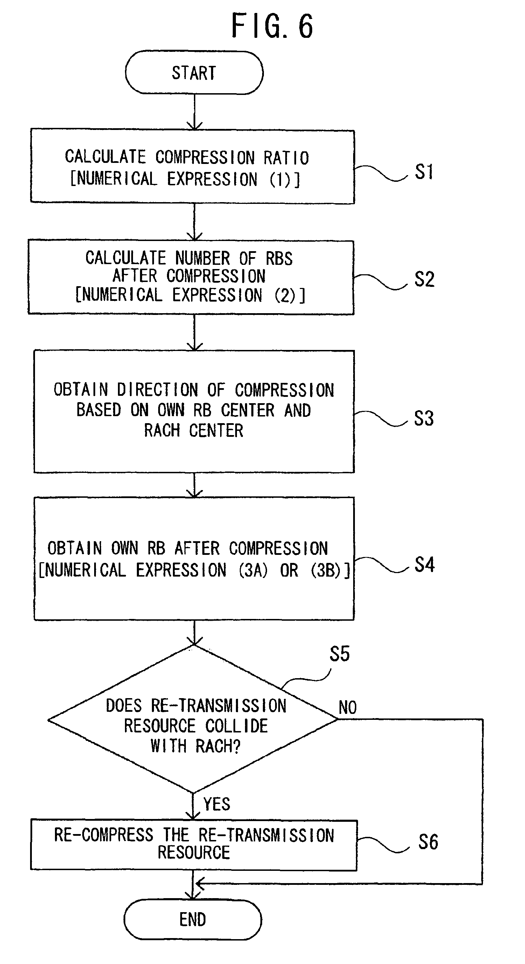

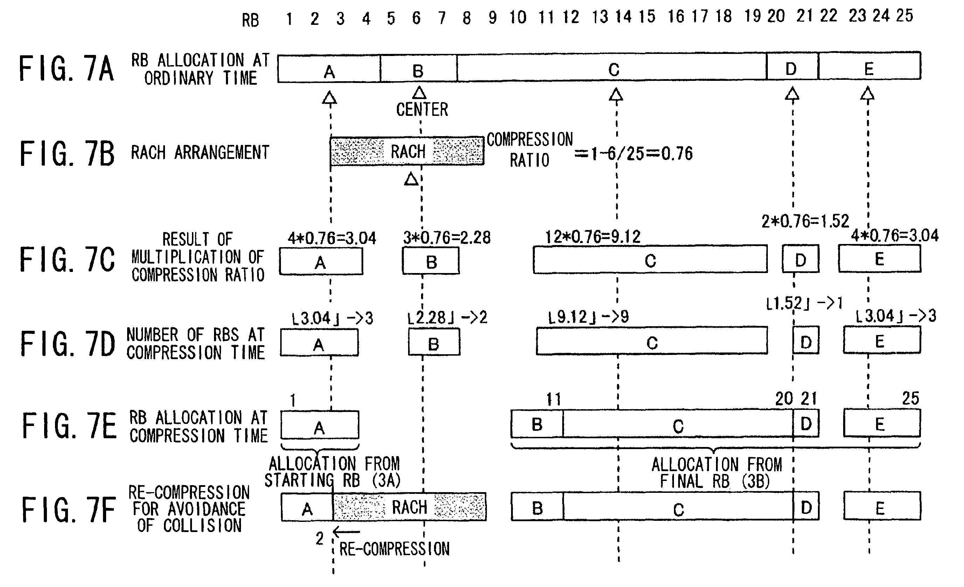

A specific example of the operation of the compression processing calculation portion 42 will be described in detail with reference to Fig. 6 and Figs. 7A to 7F.

As shown in Fig. 6, the compression processing calculation portion 42 calculates the compression ratio $\alpha$ by using the expression (1) (step S1) and calculates the number of RBs after compression by using the expression (2) (step S2).

For example, assume now that the number of RBs in the system band is 25, the number of RBs in the RACH resource is 6, and re-transmission resources (RBs at ordinary time) having numbers of RBs represented by A to E respectively (A is 4 RBs, B is 3 RBs, C is 12 RBs, D is 2 RBs and E is 4RBs) are allocated to five UEs 30 (users A to E) respectively as shown in Figs. 7A and 7B.

In this case, the compression processing calculation portion 42 obtains the compression ratio $\alpha$ = 1 - 6/25 = 0.76 in accordance with the expression (1) and obtains the number of RBs after compression by multiplying the compression ratio $\alpha$ (= 0.76) and the number of RBs in the own re-transmission resource allocated to the UE 30 in accordance with the expression (2). Incidentally, fractions below decimal point are omitted.

Accordingly, as shown in Figs. 7C and 7D, the number of RBs after compression in the user A is 4 $\times$ 0.76 = 3.04 $\fallingdotseq$ 3, the number of RBs after compression in the user B is 3 $\times$ 0.76 = 2.28 $\fallingdotseq$ 2, the number of RBs after compression in the user C is 12 $\times$ 0.76 = 9.12 $\fallingdotseq$ 9, the number of RBs after compression in the user D is 2 $\times$ 0.76 = 1.52 $\fallingdotseq$ 1, and the number of RBs after compression in the user E is 4 $\times$ 0.76 = 3.04 $\fallingdotseq$ 3.

As shown in Fig. 6, the compression processing calculation portion 42 compares the center frequency of its own re-transmission resource allocated to the UE 30 with the center frequency of the RACH resource and obtains the direction of avoidance of overlap between the re-transmission resource and the RACH resource (direction of compression: low-frequency side or high-frequency side) (step S3).

For example, assuming that the direction of increasing the RB number in the example shown in Figs. 7A to 7F is high-frequency side, then the compression processing calculation portion 42 of the UE 30 to which the re-transmission resource A is allocated decides the direction of avoidance of the RACH resource as low-frequency side because the center frequency of the re-transmission resource is lower than the center frequency of the RACH resource. The compression processing calculation portion 42 of the UE 30 to which the re-transmission resource B is allocated decides the direction of avoidance of the RACH resource as high-frequency side because the center frequency of the re-transmission resource is higher than the center frequency of the RACH resource. Similarly, the compression processing calculation portion 42 of each of the UEs 30 to which the re-transmission resources C, D and E are allocated decides the direction of avoidance of the RACH resource as high-frequency side.

As shown in Fig. 6, the compression processing calculation portion 42 obtains the starting or final RB of the re-transmission resource in accordance with the expression (3A) or (3B) corresponding to the decided direction. Incidentally, fractions below decimal point are rounded off (step S4).

For example, as shown in Fig. 7E, the compression processing calculation portion 42 of the user A calculates the starting RB = 0.76 $\times$ 1 = 0.76 of the re-transmission resource after compression in accordance with the expression (3A) and obtains the starting RB = 1 as the value rounded off. The compression processing calculation portion 42 of the user B calculates the final RB = 25 - (25 - 7) $\times$ 0.76 = 11.32 of the re-transmission resource after compression in accordance with the expression (3B) and obtains the final RB = 11 as the value rounded off. Similarly, the final RBs in the users C, D and E are decided as 20, 21 and 25 respectively in accordance with the expression (3B).

In this stage, overlap between the re-transmission resource and the RACH resource may be avoided or may not be avoided. Therefore, as shown in Fig. 6, the compression processing calculation portion 42 compares the re-transmission resource after compression with the RACH resource and judges whether overlap occurs or not (step S5). When the judgment results in that there is no overlap, the compression processing is completed (N route in step S5). When the judgment results in that there is overlap, the compression processing calculation portion 42 re-compresses the re-transmission resource to eliminate overlap as shown in Fig. 7E (Y route in step S5 and step S6 in Fig. 6).

As described above, each of UEs 30 located in the radio area of the eNB 10 uses the UL resource control portion (compression processing calculation portion) 42 to control the frequency resource used for transmission of re-transmission data when the re-transmission data is transmitted in periodic transmission timing allowing a random access signal to be transmitted by use of the RACH resource shared with the other UEs 30, with a result that the frequency resource becomes smaller than the re-transmission resource allocated by the eNB 10 so as not to overlap the RACH resource. Each UE 30 performs transmission of the re-transmission data by using the resource.

When each UE 30 compresses the re-transmission resource, the puncture ratio of HARQ varies (i.e. is lowered) according to the compression ratio $\alpha$, that is, the ratio of the frequency resource autonomously selected by the UE 30 to the frequency resource allocated by the eNB 10. Accordingly, it is preferable that the UE 30 increases transmission power to increase transmission power per bit to thereby improve transmission bit reliability. On this occasion, it is preferable from the viewpoint of transmission power consumption saving that the total transmission power is not changed.

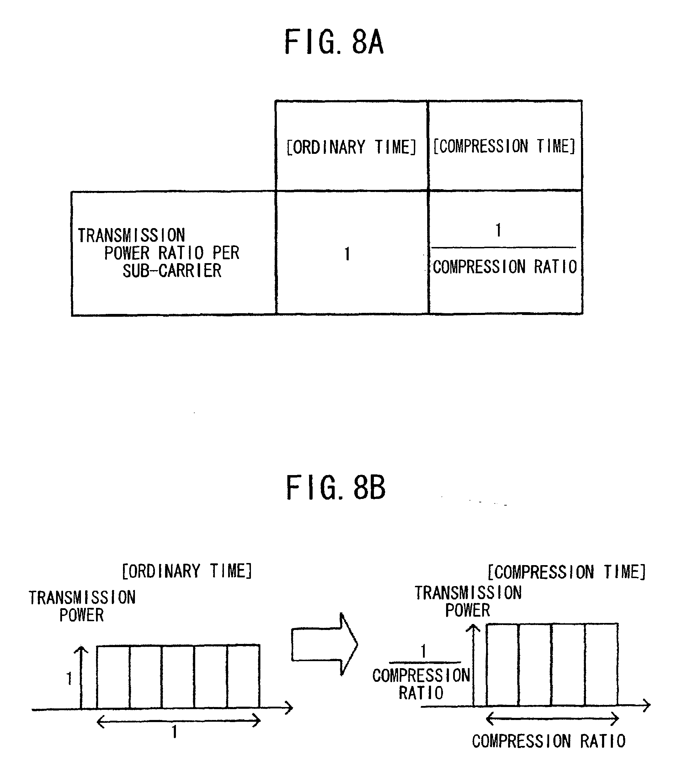

Therefore, for example, the compression processing calculation portion 42 has the option to hold transmission power control data (ratio of transmission power per sub-carrier at compression time to that at ordinary time) as shown in Fig. 8A in a memory etc. (not shown) and to control the transmission power control portion 34 based on the data. That is, the transmission power control portion 34 increases transmission power per bit at re-transmission time without change of total transmission power by multiplying the reciprocal ($1/\alpha$) of the compression ratio $\alpha$ and transmission power of the re-transmission resource allocated before compression as schematically shown in Fig. 8B.

On the other hand, the compression processing calculation portion (identifying unit) 19 of the eNB 10 specifies (identifies) the re-transmission resources (frequency allocation state shown in Fig. 7F) autonomously controlled (selected) by the UEs 30 respectively by performing the same process as that of the compression processing calculation portion 42 of each UE 30. The UL scheduler 20 of the eNB 10 controls the operation of the demodulating portion 17 based on the specification so that reception processing of signals re-transmitted from the respective UEs 30 can be performed in appropriate timing and frequency.

Incidentally, the respective UEs 30 may notify the eNB 10 of information concerning the re-transmission resources autonomously selected by the UEs 30, so that the eNB 10 can specify the re-transmission resources autonomously selected by the UEs 30, based on the notification. In this case, the eNB 10 can dispense with the calculation process for compression control. Although it is preferable that a UL control channel is used for the notification if the UL control channel is available, a data channel may be used for the notification if the UL control channel is not available.

When the compression control is performed, any free frequency resource is generated in the system band. The free frequency resource may be left as free or may be allocated to another UL communication. If the free frequency resource is allocated to another UL communication, the eNB 10 uses the UL scheduler 20 to schedule free resources based on the result of processing in the compression processing calculation portion 19.

As described above, in accordance with this embodiment, overlap (collision) between the re-transmission resource of synchronous HARQ and the RACH resource can be avoided autonomously by each UE 30 without necessity of scheduling information of the other users (UEs 30), so that lowering of throughput in DL and UL communications can be suppressed.

On this occasion, the users connected to the eNB 10 can compress re-transmission resources respectively and fairly, so that such unfairness among the users that part of the users cannot perform re-transmission can be suppressed.

Although the aforementioned example is based on the case where only one RACH is set in the system band, the invention can also be applied to the case where two or more RACHs are set.

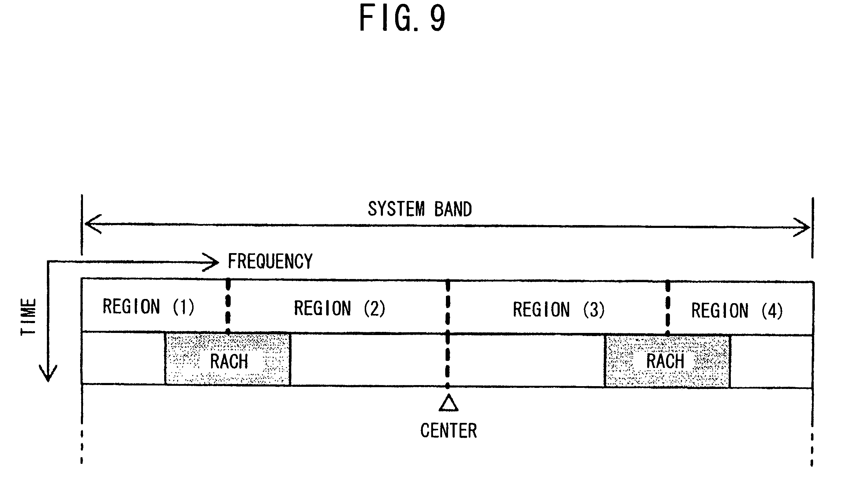

For example, when two RACHs are set laterally symmetrically with respect to the center frequency (center RB) of the system band as shown in Fig. 9, four regions (1) to (4) are defined in such a manner that the system band is divided into four regions by the center frequencies of the RACHs and the center frequency of the system band. In this case, compression control of re-transmission resources can be performed to avoid overlap with the RACH resources when the expressions (1), (2), (3A) and (3B) are replaced by the following expressions.

$$\text{Compression Ratio } \alpha = 2 \times (\text{Number of RBs in RACH}) \div (\text{Number of RBs in System Band}) \dots (2.1)$$

$$\text{Number of RBs after Compression} = (\text{Number of Allocated RBs at Ordinary Time}) \times \alpha \dots (2.2)$$

$$\text{Starting RB of Region (1)} = \alpha \times (\text{Starting RB at Ordinary Time}) \dots (2.3A)$$

$$\text{Final RB of Region (2)} = (\text{Center RB}) - ((\text{Center RB}) - (\text{Final RB at Ordinary Time})) \times \alpha \dots (2.3B)$$

$$\text{Starting RB of Region (3)} = (\text{Center RB}) + \alpha \times ((\text{Starting RB at Ordinary Time}) - (\text{Center RB})) \dots (2.3C)$$

$$\text{Final RB of Region (4)} = (\text{Center RB}) + (\text{Number of RBs in System Band}) - ((\text{Number of RBs in System Band}) - (\text{Final RB at Ordinary Time})) \times \alpha \dots (2.3D)$$

With respect to the expressions (2.3A), (2.3B), (2.3C) and (2.3D), each UE 30 compares the center frequency (RB) of the re-transmission resource allocated by the eNB 10 with the center (RB) of the system frequency band and the center frequency (RB) of each RACH resource, judges which of regions (1) to (4) the UE 30 belongs to based on the comparison, and selectively uses an expression corresponding to a result of the judgment.

When a number N of RACHs are set in the system frequency band, the expressions (1), (2), (3A) and (3B) can be generalized as follows.

$$\text{Compression Ratio } \alpha = 1 - N \times (\text{Number of RBs in RACH}) \div (\text{Number of RBs in System Band}) \dots (3.1)$$

$$\text{Number of RBs after Compression} = (\text{Number of Allocated RBs at Ordinary Time}) \times \alpha \quad \ldots \quad (3.2)$$

$$\text{Starting RB of Lower-Frequency Side Compression User than Center RB} = \alpha \times (\text{Starting RB at Ordinary Time}) \quad \ldots \quad (3.3A)$$

$$\text{Final RB of Higher-Frequency Side Compression User than Center RB} = (\text{Number of RBs in System Band}) - [(\text{Number of RBs in System Band}) - (\text{Number of RBs at Ordinary Time})] \times \alpha \quad \ldots \quad (3.3B)$$

Modified Example According to the aforementioned example, the re-transmission resource of a UE 30 in which the re-transmission resource allocated by the eNB 10 is the minimum (1 RB) is lost because the compression ratio $\alpha$ is smaller than 1. Some UL resource may be used for communication requiring guarantee of high QoS (priority) such as voice communication due to VoIP.

With respect to such a UL resource to be treated preferentially, the UE 30 is notified of the fact that the UL resource is a UL resource (fourth frequency resource: hereinafter referred to as occupation prohibition resource) prohibited from being occupied as a re-transmission resource at the compression time. As a result, the UE 30 can perform compression control of the re-transmission resource to avoid overlap with the occupation prohibition resource as well as RACH.

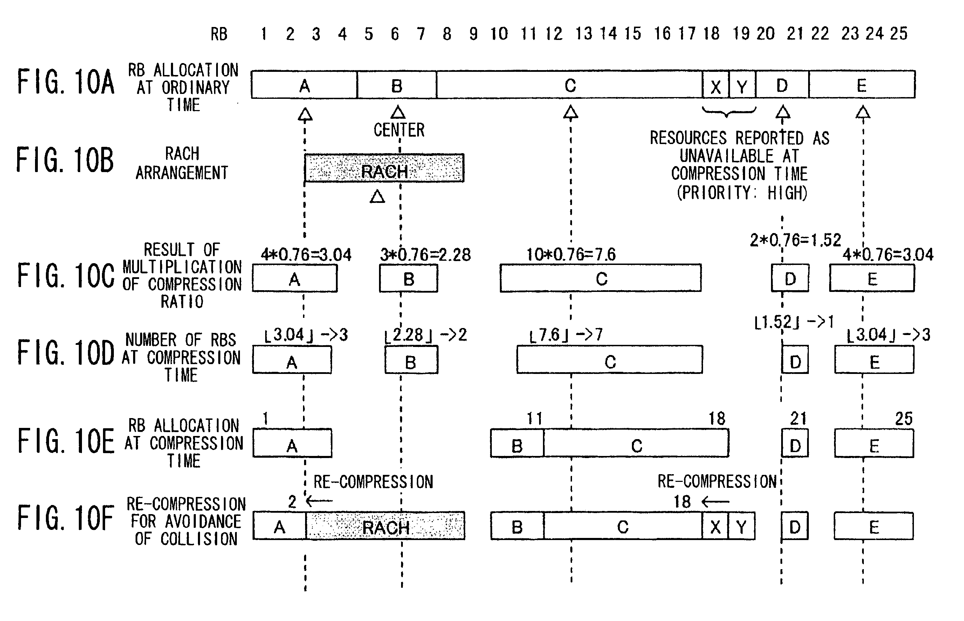

For example, as shown in Fig. 10A, the eNB 10 notifies the UE 30 of the fact that two RBs (see the reference symbols X and Y) designated by RB numbers 18 and 19 in the system band are occupation prohibition resources. A DL control (notification) channel of UL-MAP or the like can be used for the notification.

The UE 30 (for example, compression processing calculation portion 42) performs the same process as that shown in steps S1 to S6 in Fig. 6 to thereby perform compression control of the re-transmission resource to avoid overlap between the RACH resource and the re-transmission resource. The UE 30 further judges whether the re-transmission resource overlaps any occupation prohibition resource or not. When the judgment results in that there is any overlap, the compression processing calculation portion 42 performs compression control of the re-transmission resource again to avoid the overlap. Since the re-transmission resource allocated to the user C overlaps the occupation prohibition resources X and Y As shown in Fig. 10E, the re-transmission resource is re-compressed as shown in Fig. 10F.

Accordingly, while the same operation and effect as those in the aforementioned example can be obtained, QoS of high-priority communication can be guaranteed easily because the re-transmission resource does not occupy the UL resource allocated to high-priority UL communication.

Incidentally, the sequence of judgment as to whether the re-transmission resource overlaps any RACH resource or not, judgment as to whether the re-transmission resource overlaps any occupation prohibition resource or not, and re-compression control can be selected arbitrarily. Re-compression control may be performed after overlap with the occupation prohibition resource is checked. Or the two may be performed in parallel.

Others Although the compression ratio $\alpha$ is set to be common to the UEs 30 to keep fairness among the UEs 30, different compression ratios according to the UEs 30 may be set under a predetermined rule. For example, weighting may be made so that the compression ratio $\alpha$ becomes higher (i.e. a larger deal of re-transmission resource can be reserved) as the priority (QoS, etc.) of the user (UE 30) becomes higher. In this case, the eNB 10 may notify each UE 30 of the compression ratio with respect to the UE 30 via a notification channel or the compression ratio with respect to the UE 30 may be fixedly set in the UE 30 in advance.

The RACH is located as a channel (resource) shared by the UEs 30. The channel (resource) used for re-transmission individually by each of the UEs 30 is positioned as an individual channel allocated to each UE 30 individually by the eNB 10. Accordingly, the aforementioned collision avoidance control (compression control) can be applied to overlap between another shared channel than the RACH and an individual channel used for another purpose than re-transmission.

According to the disclosed technique, overlap (collision) between a frequency resource used for transmission of a first signal and a frequency resource used for transmission of a second signal can be avoided autonomously by each radio terminal without necessity of allocation information of frequency resources allocated to other radio terminals.

Moreover, each radio terminal fairly controls the frequency resource used for transmission of the second signal so that the frequency resource becomes smaller than the frequency resource allocated to the radio terminal by a radio base station..

Certain implementations described herein may apply to, for example, a method or process, an apparatus, or a software program. An apparatus may be implemented in, for example, appropriate hardware, software, and firmware. The methods may be implemented in, for example, an apparatus such as, for example, a processor, which refers to processing devices in general.

Implementations of the various processes and features described herein may be embodied in a variety of different equipment or applications, particularly, for example, equipment or applications associated with data encoding and decoding, or equipment or applications associated with content production. Examples of equipment include coders, decoders, codecs, web servers, set-top boxes, laptops, personal computers, cell phones, PDAs, and other communication devices.

Additionally, the methods may be implemented by instructions being performed by processing devices, including, for example, a computer, a microprocessor, an integrated circuit, or a programmable logic device. Processing devices also include communication devices, such as, for example, computers, cell phones, portable/personal digital assistants ("PDAs"), and other devices that facilitate communication of information between end-users. Such instructions may be stored on a processor-readable medium such as, for example, an integrated circuit, a software carrier or other storage device such as, for example, a hard disk, a compact diskette, a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium having instructions for carrying out a process. Certain implementations may also produce a signal formatted to carry information that may be, for example, stored or transmitted. The information may include, for example, instructions for performing a method, or data produced by one of the described implementations. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links. A number of implementations have been described. Nevertheless, it will be understood that various modifications may be made. Other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the following claims.

**Claims**

1. An uplink communication method in a radio communication system having a radio base station (10) and radio terminals (30) communicating with the radio base station, the method comprising:

   controlling a frequency resource used for transmission of a second signal when the second signal is to be transmitted in a periodic transmission timing which overlaps with a timing in which a first signal is to be transmitted by use of a first frequency resource shared with other radio terminals, such that the frequency resource used for transmission of the second signal is changed to a third frequency resource which is smaller than a second frequency resource allocated to the radio terminal by the radio base station for transmission of said second signal, the third frequency resource not to overlap the first frequency resource; and
   transmitting the second signal to the radio base station by using the controlled third frequency resource.

2. The uplink communication method in a radio communication system according to claim 1, wherein the third frequency resource is autonomously determined by each of the radio terminals based on information concerning system frequency resource availability in the radio communication system and information concerning allocation of the first frequency resource.

**3.** The uplink communication method in a radio communication system according to claim 2, wherein the information concerning the system frequency resource and the information concerning allocation of the first frequency resource are sent from the radio base station.

**4.** The uplink communication method in a radio communication system according to any preceding claim, wherein the radio base station identifies the third frequency resource used for transmission of the second signal from each of the radio terminals based on the information concerning the system frequency resource and the information concerning allocation of the first frequency resource; and the radio base station receives the second signal by using the identified third frequency resource.

**5.** The uplink communication method in a radio communication system according to any preceding claim, wherein the radio base station notifies each of the radio terminals of information concerning a fourth frequency resource prohibited from being used as the third frequency resource; and each of the radio terminals controls the third frequency resource to be a frequency resource which does not overlap the fourth frequency resource.

**6.** The uplink communication method in a radio communication system according to any preceding claim, wherein each of the radio terminals controls transmission power of the second signal in accordance with a ratio of the third frequency resource to the second frequency resource.

**7.** The uplink communication method in a radio communication system according to any preceding claim, wherein the first signal is a signal by which the radio terminal makes random access to the radio base station; and the second signal is a re-transmission signal defined so that the radio terminal should re-transmit the signal to the radio base station in periodic predetermined transmission timing.

**8.** A radio communication system comprising a radio base station (10) and radio terminals (30) communicating with the radio base station, wherein the radio communication system further comprising:

a unit for allocating a first frequency resource which is shared by the radio terminals and which is usable by each of the radio terminals to transmit a first signal to the radio base station in a transmission timing;
a unit for allocating a second frequency resource which is usable by each of the radio terminals to transmit a second signal to the radio base station; and
a unit for controlling the second frequency resource when each of the radio terminals transmits the second signal in a periodic transmission timing which overlaps with the transmission timing of the first signal, such that the second frequency resource is changed to a third frequency resource which is smaller than the allocated second frequency resource so as not to overlap the first frequency resource.

**9.** A radio terminal (30) communicating with a radio base station (10), the radio terminal comprising:

a control unit for controlling a frequency resource used for transmission of a second signal when the radio terminal is to transmit the second signal in a periodic transmission timing which overlaps with a timing in which the radio terminal is to transmit a first signal by using a first frequency resource shared with other radio terminals, such that the frequency resource is changed to a third frequency resource which is smaller than a second frequency resource allocated to the radio terminal by the radio base station for transmission of said second signal, the third frequency resource controlled so as not to overlap the first frequency resource; and
a transmission unit for transmitting the second signal to the radio base station by using the controlled third frequency resource.

**10.** The radio terminal according to claim 9, wherein the control unit determines the third frequency resource autonomously based on information concerning a system frequency resource available in the radio communication system and information concerning allocation of the first frequency resource.

**11.** The radio terminal according to claim 10, further comprising a reception unit which receives the information concerning the system frequency resource and the information concerning allocation of the first frequency resource from the radio base station, wherein the control unit determines the third frequency resource based on these kinds of information received by the reception unit.

**12.** A radio base station (10) communicable with radio terminals (30), the radio base station comprising:

a resource allocation unit for allocating a first frequency resource s hared by the radio terminals and usable by each of the radio terminals to transmit a first signal to the radio base station in a transmission timing, and a second frequency resource usable by each of the radio terminals to transmit a second signal to the radio base station;

an identifying unit which identifies a third frequency resource when each of the radio terminals transmits the second signal in a periodic transmission timing which overlaps with the transmission timing of the first signal, such that the third frequency resource is smaller than the allocated second frequency resource so as not to overlap the first frequency resource ; and

a control unit for controlling reception processing of the second signal based on a result of the identification made by the identifying unit.

**Patentansprüche**

**1.** Uplink-Kommunikationsverfahren in einem Funkkommunikationssystem, das eine Funkbasisstation (10) und Funkendgeräte (30) hat, die mit der Funkbasisstation kommunizieren, welches Verfahren umfasst:

Steuern einer Frequenzressource, die zum Senden eines zweiten Signals verwendet wird, wenn das zweite Signal in einer periodischen Sendezeitlage zu senden ist, die mit einer Zeitlage überlappt ist, in der ein erstes Signal unter Verwendung einer ersten Frequenzressource zu senden ist, die gemeinsam mit anderen Funkendgeräten genutzt wird, so dass die zum Senden des zweiten Signals verwendete Frequenzressource in eine dritte Frequenzressource verändert wird, die kleiner als eine zweite Frequenzressource ist, die dem Funkendgerät durch die Funkbasisstation zum Senden des zweiten Signals zugewiesen wurde, welche dritte Frequenzressource nicht mit der ersten Frequenzressource überlappt ist; und

Senden des zweiten Signals an die Funkbasisstation unter Verwendung der gesteuerten dritten Frequenzressource.

**2.** Uplink-Kommunikationsverfahren in einem Funkkommunikationssystem nach Anspruch 1, bei dem die dritte Frequenzressource durch jedes der Funkendgeräte auf der Basis von Informationen bezüglich der Systemfrequenzressourcenverfügbarkeit in dem Funkkommunikationssystem und Informationen bezüglich der Zuweisung der ersten Frequenzressource autonom bestimmt wird.

**3.** Uplink-Kommunikationsverfahren in einem Funkkommunikationssystem nach Anspruch 2, bei dem die Informationen bezüglich der Systemfrequenzressource und die Informationen bezüglich der Zuweisung der ersten Frequenzressource von der Funkbasisstation gesendet werden.

**4.** Uplink-Kommunikationsverfahren in einem Funkkommunikationssystem nach einem vorhergehenden Anspruch, bei dem

die Funkbasisstation die dritte Frequenzressource, die zum Senden des zweiten Signals von jedem der Funkendgeräte verwendet wird, auf der Basis der Informationen bezüglich der Systemfrequenzressource und der Informationen bezüglich der Zuweisung der ersten Frequenzressource identifiziert; und

die Funkbasisstation das zweite Signal unter Verwendung der identifizierten dritten Frequenzressource empfängt.

**5.** Uplink-Kommunikationsverfahren in einem Funkkommunikationssystem nach einem vorhergehenden Anspruch, bei dem

die Funkbasisstation jedem der Funkendgeräte Informationen bezüglich einer vierten Frequenzressource übermittelt, deren Verwendung als dritte Frequenzressource verboten ist; und

jedes der Funkendgeräte die dritte Frequenzressource steuert, um eine Frequenzressource zu sein, die nicht mit der vierten Frequenzressource überlappt ist.

**6.** Uplink-Kommunikationsverfahren in einem Funkkommunikationssystem nach einem vorhergehenden Anspruch, bei dem

jedes der Funkendgeräte die Sendeleistung des zweiten Signals gemäß einem Verhältnis der dritten Frequenzressource zu der zweiten Frequenzressource steuert.

**7.** Uplink-Kommunikationsverfahren in einem Funkkommunikationssystem nach einem vorhergehenden Anspruch, bei dem

das erste Signal ein Signal ist, durch das das Funkendgerät auf die Funkbasisstation wahlfrei zugreift; und

das zweite Signal ein Wiederholungssendesignal ist, das so definiert ist, dass das Funkendgerät das Signal an die Funkbasisstation in einer periodischen vorbestimmten Sendezeitlage wiederholt senden muss.

8. Funkkommunikationssystem, das eine Funkbasisstation (10) und Funkendgeräte (30) umfasst, die mit der Funkbasisstation kommunizieren, welches Funkkommunikationssystem ferner umfasst:

eine Einheit zum Zuweisen einer ersten Frequenzressource, die durch die Funkendgeräte gemeinsam genutzt wird und die durch jedes der Funkendgeräte verwendbar ist, um ein erstes Signal an die Funkbasisstation in einer Sendezeitlage zu senden;

eine Einheit zum Zuweisen einer zweiten Frequenzressource, die durch jedes der Funkendgeräte verwendbar ist, um ein zweites Signal an die Funkbasisstation zu senden; und

eine Einheit zum Steuern der zweiten Frequenzressource, wenn jedes der Funkendgeräte das zweite Signal in einer periodischen Sendezeitlage sendet, die mit der Sendezeitlage des ersten Signals überlappt ist, so dass die zweite Frequenzressource in eine dritte Frequenzressource verändert wird, die kleiner als die zugewiesene zweite Frequenzressource ist, um nicht mit der ersten Frequenzressource überlappt zu sein.

9. Funkendgerät (30), das mit einer Funkbasisstation (10) kommuniziert, welches Funkendgerät umfasst:

eine Steuereinheit zum Steuern einer Frequenzressource, die zum Senden eines zweiten Signal verwendet wird, wenn das Funkendgerät das zweite Signal in einer periodischen Sendezeitlage zu senden hat, die mit einer Zeitlage überlappt ist, in der das Funkendgerät ein erstes Signal unter Verwendung einer ersten Frequenzressource zu senden hat, die gemeinsam mit anderen Funkendgeräten genutzt wird, so dass die Frequenzressource in eine dritte Frequenzressource verändert wird, die kleiner als eine zweite Frequenzressource ist, die dem Funkendgerät durch die Funkbasisstation zum Senden des genannten zweiten Signals zugewiesen wurde, welche dritte Frequenzressource so gesteuert wird, um die erste Frequenzressource nicht zu überlappen; und

eine Sendeeinheit zum Senden des zweiten Signals an die Funkbasisstation unter Verwendung der gesteuerten dritten Frequenzressource.

10. Funkendgerät nach Anspruch 9, bei dem

die Steuereinheit die dritte Frequenzressource auf der Basis von Informationen bezüglich einer Systemfrequenzressource, die in dem Funkkommunikationssystem verfügbar ist, und Informationen bezüglich der Zuweisung der ersten Frequenzressource autonom bestimmt.

11. Funkendgerät nach Anspruch 10, das ferner eine Empfangseinheit umfasst, die die Informationen bezüglich der Systemfrequenzressource und die Informationen bezüglich der Zuweisung der ersten Frequenzressource von der Funkbasisstation empfängt, bei dem die Steuereinheit die dritte Frequenzressource auf der Basis dieser Arten von Informationen bestimmt, die durch die Empfangseinheit empfangen wurden.

12. Funkbasisstation (10), die mit Funkendgeräten (30) kommunizieren kann, welche Funkbasisstation umfasst:

eine Ressourcenzuweisungseinheit zum Zuweisen einer ersten Frequenzressource, die durch die Funkendgeräte gemeinsam genutzt wird und durch jedes der Funkendgeräte verwendbar ist, um ein erstes Signal an die Funkbasisstation in einer Sendezeitlage zu senden, und einer zweiten Frequenzressource, die durch jedes der Funkendgeräte verwendbar ist, um ein zweites Signal an die Funkbasisstation zu senden;

eine Identifizierungseinheit, die eine dritte Frequenzressource identifiziert, wenn jedes der Funkendgeräte das zweite Signal in einer periodischen Sendezeitlage sendet, die mit der Sendezeitlage des ersten Signals überlappt ist, so dass die dritte Frequenzressource kleiner als die zugewiesene zweite Frequenzressource ist, um die erste Frequenzressource nicht zu überlappen; und

eine Steuereinheit zum Steuern der Empfangsverarbeitung des zweiten Signals auf der Basis eines Resultates der Identifizierung, die durch die Identifizierungseinheit vorgenommen wurde.

**Revendications**

1. Procédé de communication en liaison montante dans un système de radiocommunication qui possède une station radio de base (10) et des terminaux radio (30) qui communiquent avec la station radio de base, le procédé comprenant :

le contrôle d'une ressource de fréquences utilisée pour la transmission d'un second signal lorsque ledit second signal doit être transmis au cours d'une fenêtre de transmission périodique qui chevauche une fenêtre pendant laquelle un premier signal doit être transmis à l'aide d'une première ressource de fréquences partagée avec d'autres terminaux radio, afin que la ressource de fréquences utilisée pour la transmission du second signal soit modifiée en une troisième ressource de fréquences qui est plus petite qu'une seconde ressource de fréquences affectée au terminal radio par la station radio de base en vue de la transmission dudit second signal, la troisième ressource de fréquences ne chevauchant pas la première ressource de fréquences ; et
la transmission du second signal à la station radio de base à l'aide de la troisième ressource de fréquences contrôlée.

2. Procédé de communication en liaison montante dans un système de radiocommunication selon la revendication 1, dans lequel
la troisième ressource de fréquences est déterminée de manière autonome par chacun des terminaux radio sur la base d'informations relatives à la disponibilité des ressources de fréquences du système au sein du système de radiocommunication, et d'informations relatives à l'affectation de la première ressource de fréquences.

3. Procédé de communication en liaison montante dans un système de radiocommunication selon la revendication 2, dans lequel
les informations relatives à la ressource de fréquences du système et les informations relatives à l'affectation de la première ressource de fréquences sont envoyées par la station radio de base.

4. Procédé de communication en liaison montante dans un système de radiocommunication selon l'une quelconque des revendications précédentes, dans lequel
la station radio de base identifie la troisième ressource de fréquences utilisée pour la transmission du second signal par chacun des terminaux radio sur la base des informations relatives à la ressource de fréquences du système et des informations relatives à l'affectation de la première ressource de fréquences ; et
la station radio de base reçoit le second signal à l'aide de la troisième ressource de fréquences identifiée.

5. Procédé de communication en liaison montante dans un système de radiocommunication selon l'une quelconque des revendications précédentes, dans lequel
la station radio de base transmet à chacun des terminaux radio des informations relatives à une quatrième ressource de fréquences qui ne peut être utilisée comme la troisième ressource de fréquences; et
chacun des terminaux radio contrôle la troisième ressource de fréquences afin qu'elle soit une ressource de fréquences qui ne chevauche pas la quatrième ressource de fréquences.

6. Procédé de communication en liaison montante dans un système de radiocommunication selon l'une quelconque des revendications précédentes, dans lequel
chacun des terminaux radio contrôle la puissance de transmission du second signal selon un rapport entre la troisième ressource de fréquences et le seconde ressource de fréquences.

7. Procédé de communication en liaison montante dans un système de radiocommunication selon l'une quelconque des revendications précédentes, dans lequel
le premier signal est un signal grâce auquel le terminal radio accède aléatoirement à la station radio de base ; et
le second signal est un signal de retransmission défini afin que le terminal radio retransmette le signal à la station radio de base dans une fenêtre de transmission périodique prédéterminée.

8. Système de radiocommunication qui comprend une station radio de base (10) et des terminaux radio (30) qui communiquent avec la station radio de base, ledit système de radiocommunication comprenant en outre :

une unité d'affectation d'une première ressource de fréquences qui est partagée par les terminaux radio et qui peut être utilisée par chacun des terminaux radio afin de transmettre un premier signal à la station radio de base dans une fenêtre de transmission ;
une unité d'affectation d'une seconde ressource de fréquences qui peut être utilisée par chacun des terminaux radio afin de transmettre un second signal à la station radio de base ; et
une unité de contrôle de la seconde ressource de fréquences lorsque chacun des terminaux radio transmet le second signal dans une fenêtre de transmission périodique qui chevauche la fenêtre de transmission du premier signal, afin que la seconde ressource de fréquences soit modifiée en une troisième ressource de fréquences qui est plus petite que la seconde ressource de fréquences affectée de façon à ne pas chevaucher la première ressource de fréquences.

**9.** Terminal radio (30) qui communique avec une station radio de base (10), le terminal radio comprenant :

une unité de contrôle destinée à contrôler une ressource de fréquences utilisée pour la transmission d'un second signal lorsque le terminal radio doit transmettre le second signal dans une fenêtre de transmission périodique qui chevauche une fenêtre au cours de laquelle le terminal radio doit transmettre un premier signal à l'aide d'une première ressource de fréquences partagée avec d'autres terminaux radio, de sorte que la ressource de fréquences soit modifiée en une troisième ressource de fréquences qui est plus petite qu'une seconde ressource de fréquences affectée au terminal radio par la station radio de base en vue de la transmission dudit second signal, la troisième ressource de fréquences étant contrôlée de façon à ne pas chevaucher la première ressource de fréquences ; et
une unité de transmission destinée à transmettre le second signal à la station radio de base à l'aide de la troisième ressource de fréquences contrôlée.

**10.** Terminal radio selon la revendication 9, dans lequel
l'unité de contrôle détermine la troisième ressource de fréquences de manière autonome sur la base d'informations relatives à une ressource de fréquences disponible au sein du système de radiocommunication, et d'informations relatives à l'affectation de la première ressource de fréquences.

**11.** Terminal radio selon la revendication 10, qui comprend en outre une unité de réception qui reçoit les informations relatives à la ressource de fréquences du système, et les informations relatives à l'affectation de la première ressource de fréquences de la part de la station radio de base, dans lequel l'unité de contrôle détermine la troisième ressource de fréquences sur la base de ces types d'informations reçues par l'unité de réception.

**12.** Station radio de base (10) qui peut communiquer avec des terminaux radio (30), la station radio de base comprenant :

une unité d'affectation de ressources destinée à affecter une première ressource de fréquences partagée par les terminaux radio et qui peut être utilisée par chacun des terminaux radio pour transmettre un premier signal à la station radio de base dans une fenêtre de transmission, et une seconde ressource de fréquences qui peut être utilisée par chacun des terminaux radio pour transmettre un second signal à la station radio de base;
une unité d'identification qui identifie une troisième ressource de fréquences lorsque chacun des terminaux radio transmet le second signal dans une fenêtre de transmission périodique qui chevauche la fenêtre de transmission du premier signal, afin que la troisième ressource de fréquences soit plus petite que la seconde ressource de fréquences affectée de façon à ne pas chevaucher la première ressource de fréquences ; et
une unité de contrôle destinée à contrôler la réception du second signal sur la base d'un résultat de l'identification effectuée par l'unité d'identification.

FIG. 1A       FIG. 1B

FIG. 2

eNB 10

UE 30

UE 30

UE 30

UE 30

# FIG. 3

# FIG. 4

30 (10)

[OWN SCHEDULING INFORMATION]

- STARTING RB
- FINAL RB
- NUMBER OF ALLOCATED RBS

TWO MEMBERS SELECTED FROM

[SCHEDULING INFORMATION AT COMPRESSING TIME]

- STARTING RB
- FINAL RB
- NUMBER OF ALLOCATED RBS

TWO MEMBERS SELECTED FROM

[SYSTEM INFORMATION]
- TOTAL NUMBER OF RBS

COMPRESSION PROCESSING CALCULATION PORTION

42 (19)

[RACH RESOURCE INFORMATION]

- STARTING RB
- FINAL RB
- NUMBER OF ALLOCATED RBS

TWO MEMBERS SELECTED FROM

# FÍG. 5

| RB ALLOCATION AT ORDINARY TIME | | | RB ALLOCATION AT COMPRESSING TIME | | |
|---|---|---|---|---|---|
| STARTING RB | FINAL RB | NUMBER OF ALLOCATED RBS | STARTING RB | FINAL RB | NUMBER OF ALLOCATED RBS |
| 1, (6) | | 6 | 1, (4) | | 4 |
| 1, (8) | | 8 | 1, (6) | | 6 |
| 1, (9) | | 9 | 1, (6) | | 6 |
| 1, (10) | | 10 | 1, (7) | | 7 |
| 1, (12) | | 12 | 1, (9) | | 9 |
| 1, (15) | | 15 | 1, (11) | | 11 |
| • | | • | • | | • |
| • | | • | • | | • |
| • | | • | • | | • |
| • | | • | • | | • |
| (14), 25 | | 12 | (17), 25 | | 9 |
| (16), 25 | | 10 | (19), 25 | | 7 |
| (17), 25 | | 9 | (20)́, 25 | | 6 |
| (18), 25 | | 8 | (20), 25 | | 6 |
| (20), 25 | | 6 | (22), 25 | | 4 |

# FIG. 6

```
        START
          │
          ▼
┌──────────────────────────┐
│ CALCULATE COMPRESSION RATIO │ ～ S1
│ [NUMERICAL EXPRESSION (1)] │
└──────────────────────────┘
          │
          ▼
┌──────────────────────────┐
│   CALCULATE NUMBER OF RBS   │
│      AFTER COMPRESSION      │ ～ S2
│ [NUMERICAL EXPRESSION (2)] │
└──────────────────────────┘
          │
          ▼
┌──────────────────────────┐
│ OBTAIN DIRECTION OF COMPRESSION │
│   BASED ON OWN RB CENTER AND   │ ～ S3
│         RACH CENTER           │
└──────────────────────────┘
          │
          ▼
┌──────────────────────────┐
│ OBTAIN OWN RB AFTER COMPRESSION │
│ [NUMERICAL EXPRESSION (3A) OR (3B)] │ ～ S4
└──────────────────────────┘
          │
          ▼
      ╱╲  S5
     ╱    ╲
    ╱ DOES RE-TRANSMISSION ╲  NO
   ╱ RESOURCE COLLIDE        ╲────────┐
    ╲    WITH RACH?         ╱         │
     ╲                    ╱           │
      ╲    ╱                          │
        │ YES                         │
        ▼                             │
┌──────────────────────────┐         │
│ RE-COMPRESS THE RE-TRANSMISSION │ ～ S6  │
│          RESOURCE          │         │
└──────────────────────────┘         │
        │◄───────────────────────────┘
        ▼
        END
```

RB 1 2 3 4 5 6 7 8 9 10 11 12 13 14 15 16 17 18 19 20 21 22 23 24 25

**FIG. 7A** RB ALLOCATION AT ORDINARY TIME

| A | B | C | D | E |

△ △(CENTER) △ △ △

**FIG. 7B** RACH ARRANGEMENT

RACH — COMPRESSION RATIO $=1-6/25=0.76$

△

**FIG. 7C** RESULT OF MULTIPLICATION OF COMPRESSION RATIO

$4*0.76=3.04$ A  $3*0.76=2.28$ B  $12*0.76=9.12$ C  $2*0.76=1.52$ D  $4*0.76=3.04$ E

**FIG. 7D** NUMBER OF RBS AT COMPRESSION TIME

$\lfloor 3.04 \rfloor \to 3$ A  $\lfloor 2.28 \rfloor \to 2$ B  $\lfloor 9.12 \rfloor \to 9$ C  $\lfloor 1.52 \rfloor \to 1$ D  $\lfloor 3.04 \rfloor \to 3$ E

**FIG. 7E** RB ALLOCATION AT COMPRESSION TIME

1 A    11 B | C | 20 21 D    25 E

ALLOCATION FROM STARTING RB (3A)    ALLOCATION FROM FINAL RB (3B)

**FIG. 7F** RE-COMPRESSION FOR AVOIDANCE OF COLLISION

A | RACH    B | C | D    E

2 ← RE-COMPRESSION

EP 2 053 894 B1

# FIG. 8A

|  | [ORDINARY TIME] | [COMPRESSION TIME] |
|---|---|---|
| TRANSMISSION POWER RATIO PER SUB-CARRIER | 1 | $\dfrac{1}{\text{COMPRESSION RATIO}}$ |

# FIG. 8B

[ORDINARY TIME]

TRANSMISSION POWER

[COMPRESSION TIME]

TRANSMISSION POWER

FIG. 9

RB  1 2 3 4 5 6 7 8 9 10 11 12 13 14 15 16 17 18 19 20 21 22 23 24 25

FIG. 10A  RB ALLOCATION AT ORDINARY TIME

FIG. 10B  RACH ARRANGEMENT

RESOURCES REPORTED AS UNAVAILABLE AT COMPRESSION TIME (PRIORITY: HIGH)

FIG. 10C  RESULT OF MULTIPLICATION OF COMPRESSION RATIO

4*0.76=3.04  3*0.76=2.28  10*0.76=7.6  2*0.76=1.52  4*0.76=3.04

FIG. 10D  NUMBER OF RBS AT COMPRESSION TIME

⌊3.04⌋ ->3  ⌊2.28⌋ ->2  ⌊7.6⌋ ->7  ⌊1.52⌋ ->1  ⌊3.04⌋ ->3

FIG. 10E  RB ALLOCATION AT COMPRESSION TIME

FIG. 10F  RE-COMPRESSION FOR AVOIDANCE OF COLLISION

RE-COMPRESSION

EP 2 053 894 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007276636 A
- JP 2007006080 A
- JP 2007194749 A